# EUROPEAN PATENT SPECIFICATION

(11) **EP 2 979 937 B1**
(45) Date of publication and mention of the grant of the patent: **26.04.2017**
(21) Application number: 14775652.2
(22) Date of filing: 07.01.2014
(51) Int. Cl.: B60S 3/04

(54) **DRYING DEVICE FOR VEHICLE WASHING MACHINES**
TROCKNUNGSVORRICHTUNG FÜR FAHRZEUGWASCHMASCHINEN
DISPOSITIF DE SÉCHAGE POUR MACHINES DE LAVAGE DE VÉHICULES

(30) Priority: 26.03.2013 ES 201330433
(43) Date of publication of application: 03.02.2016
(73) Proprietor: Istobal, S.A., 46250 La Alcudia (Valencia) (ES)
(72) Inventor: TOMÁS PUCHADES, Yolanda, E-46250 La Alcudia (Valencia) (ES)
(74) Representative: Ungria López, Javier
(86) International application number: PCT/ES2014/070006
(87) International publication number: WO 2014/154919

(56) References cited:
- CN-Y- 2 347 833
- JP-A- 2009 292 186
- US-A- 5 266 123
- US-A1- 2011 284 030

## Description

### OBJECT OF THE INVENTION

This invention, as expressed in the title of this descriptive report, refers to a drying device for vehicle washing machines designed to provide a flow of air which exits at great speed through a longitudinal narrowing oriented towards the vehicle to be dried after it has been washed, in such a way that the device in the invention as a whole is supported on pairs of moving carriages to regulate the distance between the device and the vehicle, with the notable feature that the machine can incorporate one or more drying devices.

Starting from this premise, the purpose of the invention is to achieve a more silent drying device, with less losses of load and with a smaller static load pressure, which will lead to lower energy consumption, and a further notable feature being the low noise produced by the device when it is operating.

### BACKGROUND OF THE INVENTION

Currently, for the drying of vehicles in gantry car washes, the machines have an upper drying device and two lateral drying devices.

These devices are based on radial-type centrifugal turbo-fans. In these devices, the trajectory of the air follows an axial direction to the inlet and a direction parallel to a radial plane to the outlet. The impeller of this type of turbofans is formed of blades which comprise: forward blades, backward blades or radial blades.

Depending on the air trajectory, the types of fans may be:
- Centrifugal/radial. In this case, the air trajectory follows a direction axial to the entry and a direction parallel to a plane radial to the exit.
- Axial. In this case, the entry of the air and the exit follow a trajectory according to coaxial cylindrical surfaces.
- Tangential. In this case, the trajectory of the air in the impeller of these fans is normal to the axle, both at the entry and the exit, crossing the body of the axle.
- Helico-centrifugal. In this case, it comprises an intermediate structure between centrifugal fans and axial-type fans. The air enters in the same way as in axial fans and exits in the same way as in centrifugal fans.

To dry the upper part of the vehicle, one or two centrifugal radial-type fans are used, with a nozzle to channel the air. It is located in the central part of the machine, and rises and falls while copying the shape of the vehicle, releasing the air at the smallest possible distance from the vehicle to optimise the process.

The methods used to orient the air outlet nozzles for drying the upper part are by means of pneumatic systems in which the nozzle reaches an angular amplitude of 45° and using systems with a geared motor with a cam encoder for intermediate and end stops, where the nozzle may make complete revolutions of 360°.

For drying the sides of the vehicle, there are two drying systems located on the sides of the machine which blow air against the sides of the vehicle. They consist of a centrifugal radial turbofan and a nozzle to channel the air.

The Chinese utility model with publication number CN 2347833Y consists of an automatic vehicle cleaning machine, composed principally of a chassis, a spraying system, a washing system and a dry-blowing system, in which the dry-blowing system is composed of a dry-blowing motor and a large number of small fans uniformly arranged in series along the line of the shaft.

The row of small fans arranged in series is directly arranged in a blowing orifice.

The dry-blowing system in the automatic vehicle cleaning device has the advantages of less loss of wind, uniform blowing, a good drying effect, less motor power and less noise.

This machine incorporates sloping impellers, with the limitation that they do not cover the whole width, in other words, there are gaps between them. This means that not all the air flow is used.

Also known is the Japanese patent with publication no. JP 2009292186, which describes a drying system for washing machines comprising an upper nozzle and two side nozzles formed by tangential fans with a single impeller coupled to a drive motor. The drawback of this system is that the horizontal nozzle cannot cover the whole surface of the vehicle using a single impeller, because an excessively long impeller causes vibrations and incorrect functioning of the nozzle.

### DESCRIPTION OF THE INVENTION

In order to meet the objectives and avoid the drawbacks mentioned in the previous sections, the invention proposes a drying device for vehicle washing machines which comprises, in principle:
- An air inlet grille and a narrow outlet for air which is projected onto a vehicle to dry it.
- At least one rotating impeller using a motor element, the vanes of which suck in the air from the outside and blow it out through the narrow outlet when the impeller rotates.
- A volute casing which has an independent rotating movement.

The volute casing includes a tangential outlet narrowing all along the volute casing.

The device also comprises:
- At least two tangential in-line impellers, located inside the volute casing; these tangential impellers incorporate transverse shafts arranged in the same direction, which are coupled at their end portions on supports selected between a number of first stationary supports of end heads: anterior and posterior; and a number of second intermediate supports where adjacent end portions of the transverse shafts meet.
- A cantilevered transverse gantry which connects both end heads: anterior and posterior.
- An intermediate reinforcement which connects both end heads, with the intermediate reinforcement being located inside the volute casing.

The intermediate supports comprise central seating supports connected to the intermediate reinforcement.

The inlet grille is arranged on a longitudinal area of the volute casing, all along its length. Housed inside the anterior end head is the motor element which transmits the rotating movement to the tangential impeller.

The posterior end head houses in its interior a geared motor associated with the volute casing, to direct the outgoing air through its tangential narrowing, thus allowing the air outlet to be situated in different positions to facilitate drying.

The geared motor transmits a rotating movement in coaxial fashion to the volute casing.

The drying device also comprises radial extensions which start from external front faces of the end heads, anterior and posterior, with these radial extensions being connected to moving carriages which pull the whole of the drying device.

The blades of the tangential impellers have a flat surface in one embodiment and in another embodiment have a helicoidal run.

Hereinafter, in order to give a better understanding of the description, the object of the invention has been detailed in a series of drawings that are an integral part of the report and are for illustration purposes and without limitation.

### BRIEF DESCRIPTION OF THE DRAWINGS

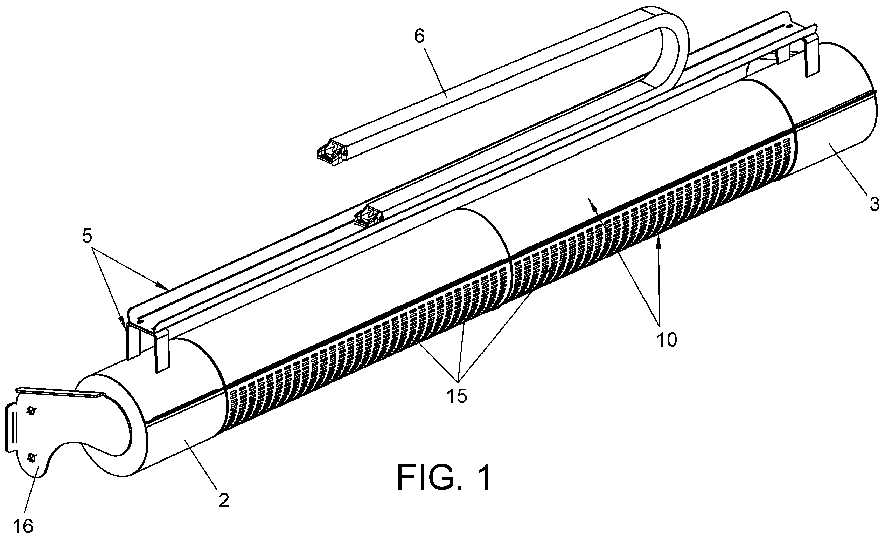

Figure 1.- Shows a perspective view of the drying device for vehicle washing machines.

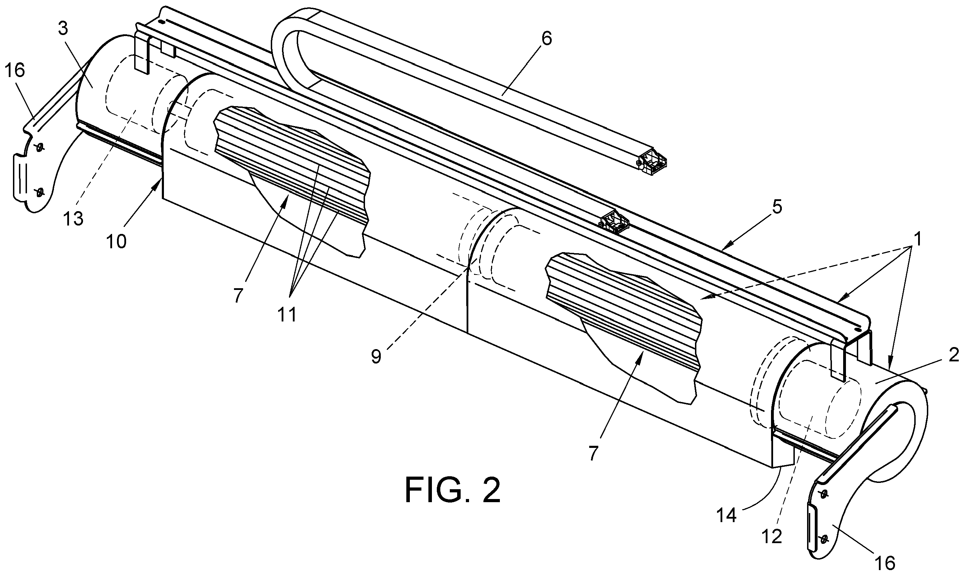

Figure 2.- Shows another perspective view of the drying device.

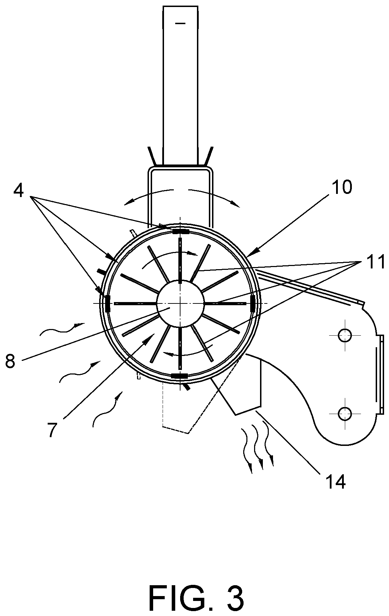

Figure 3.- Shows a profile view of the drying device.

### DESCRIPTION OF AN EXAMPLE OF AN EMBODIMENT OF THE INVENTION

Considering the numbering adopted in the figures, the drying device for vehicle washing machines considers the following nomenclature used in the description:
1.- Lengthened chassis
2.- Anterior end head
3.- Posterior end head
4.- Intermediate reinforcement
5.- Transverse bridge
6.- Hose-holder chain
7.- Tangential impellers
8.- Transverse shafts
9.- Central seating support
10.- Volute casing
11.- Blades
12.- Motor element
13.- Geared motor
14.- Tangential narrowing
15.- Inlet grille
16.- Radial extensions

It comprises a lengthened chassis 1 formed of two end heads: anterior 2 and posterior 3, and an intermediate reinforcement 4 which connects both end heads 2-3. The lengthened chassis 1 also includes a transverse bridge 5 to support a hose-holder chain 6.

Between both end heads 2-3 at least two tangential impellers 7 are mounted in-line, one after the other, with the areas where their transverse shafts 8 meet supported on a first intermediate support determined by a central seating support 9 associated with the intermediate reinforcement 4.

Between both end heads 2-3 a volute casing 10 is mounted, in which the tangential impellers 7 are housed; these tangential impellers 7 have blades 11 attached to the transverse shafts 8, the free ends of which are coupled to first stationary supports of the end heads 2-3

One of the free ends of said central shafts 8 connects with the exit shaft of a motor element 12 to transmit the rotating movement to the tangential impellers 7, via its transverse shafts 8, with said motor element 12 being located inside the anterior end head 2.

Meanwhile, housed inside the posterior end head 3 is a geared motor 13 which transmits its rotating movement to the volute casing 10 to direct the outlet for the air flow generated by the rotation of the tangential impellers 7. Said outlet is located to correspond with a tangential narrowing 14 which forms part of the volute casing itself 10.

The volute casing 10 also includes in its lateral wall an inlet grille 15 which constitutes the air intake, so that when the two tangential impellers 7 rotate, the air is absorbed and sucked in from the exterior towards the interior of the volute casing 10, with this air flow then blown out at high speed through the tangential narrowing 14 to dry the vehicle.

The end heads 2 and 3 are attached to moving carriages (not shown in the figures) by means of radial extensions 16 which start from the external front faces of the aforementioned end heads 2 and 3. These moving carriages are used to move the whole device in the invention closer to or further away from the vehicle to be dried.

In one embodiment, the blades 11 comprise a radial structure with a flat surface, and in another embodiment it comprises a helicoidal structure.

Some of the advantages of the device in the invention are the following:
- The tangential impellers can be used for drying systems in car washing machines.
- The use of this type of tangential impellers gives better performance, less energy consumption and lower noise pressure.

- The fact that the air flow reaches further allows us to work at a greater distance from the vehicle, improving the safety of the system when drying.
- The system allows us to change the direction of the drying without having to move anything other than the volute casing, with the motor-impeller system remaining in a fixed position.
- Because it is a modular system, it allows us to reach any drying height/width that the machine requires.
- Because it is a more compact system, it allows the washing machine to be made bigger, improving the maintenance tasks.

## Claims

1. DRYING DEVICE FOR VEHICLE WASHING MACHINES, comprising:
- an air inlet grille and a narrow outlet for air which is projected onto a vehicle to dry it;
- at least one rotating impeller using a motor element, the blades of which suck in the air from the outside and blow it out through the narrow outlet when the impeller rotates;
- a volute casing which has an independent rotating movement; in which the volute casing includes a tangential narrowing Outlet all along the volute casing;
**characterised in that** it comprises:
- at least two tangential impellers (7) in line, located inside the volute casing (10); in which said tangential impellers (7) include transverse shafts (8) arranged in the same direction which are coupled by their end portions in supports selected from first stationary supports of end heads: anterior (2) and posterior (3); and a number of second intermediate supports where adjacent end portions of the transverse shafts (8) meet;
- a cantilevered transverse gantry (5) which connects both end heads: anterior (2) and posterior (3);
- an intermediate reinforcement (4) which connects both end heads (2) and (3), with the intermediate reinforcement (4) being located inside the volute casing (10);
where the intermediate supports comprise central seating supports (9) connected to the intermediate reinforcement (4).

2. DRYING DEVICE FOR VEHICLE WASHING MACHINES, according to claim 1, **characterised in that** the inlet grille (15) is arranged on a longitudinal area of the volute casing (10), all along its length.

3. DRYING DEVICE FOR VEHICLE WASHING MACHINES, according to any of the previous claims, **characterised in that**:
- housed inside the anterior end head (2) is the motor element (12) which transmits the rotating movement to the tangential impeller (7);
- the posterior end head (3) houses in its interior a geared motor (13) associated with the volute casing (10) to direct the outlet air through its tangential narrowing (14), in which the geared motor (13) transmits in coaxial fashion a rotating movement to the volute casing (10).

4. DRYING DEVICE FOR VEHICLE WASHING MACHINES, according to any of the previous claims, **characterised in that** it comprises radial extensions (16) which start from the external front faces of the end heads (2-3), with these radial extensions (16) being connected to moving carriages which pull the whole of the drying device.

5. DRYING DEVICE FOR VEHICLE WASHING MACHINES, according to any of the previous claims, **characterised in that** the blades of the tangential impellers (7) have a flat surface.

6. DRYING DEVICE FOR VEHICLE WASHING MACHINES, according to any of the claims 1 to 4, **characterised in that** the blades of the tangential impellers (7) have a helicoidal run.

## Patentansprüche

1. Trocknungsvorrichtung für Fahrzeugwaschanlagen, die umfasst:
ein Lufteinlassgitter und einen schmalen Auslass für Luft, die auf ein Fahrzeug gerichtet wird, um es zu trocknen;
wenigstens ein rotierendes Gebläserad, bei dem ein Motor-Element eingesetzt wird, wobei dessen Flügel die Luft von außen ansaugen und sie über den schmalen Auslass ausblasen, wenn sich das Gebläserad dreht;
ein Spiralgehäuse, das eine unabhängige Drehbewegung aufweist;
wobei das Spiralgehäuse einen tangentialen, sich verengenden Auslass entlang des gesamten Spiralgehäuses enthält;
**dadurch gekennzeichnet, dass** sie umfasst:
wenigstens zwei in Reihe angeordnete Tangential-Gebläseräder (7), die sich im Inneren des Spiralgehäuses (10) befinden, wobei die Tangential-Gebläseräder (7) Querwellen (8) enthalten, die in der gleichen Richtung angeordnet sind und über ihre Endabschnitte in Lagerungen eingesetzt sind, die aus ersten stationären Lagerungen von Kopfteilen, d. h. einem vorderen (2) und einem hinteren (3), sowie einer Anzahl zweiter Zwischen-Lagerungen ausgewählt werden, an denen aneinandergrenzende Endabschnitte der Querwellen (8) aufeinandertreffen;
eine freitragende Quer-Brücke (5), die beide Kopfteile, d. h. das vordere (2) und das hintere (3), verbindet;
eine Zwischen-Verstärkung (4), die beide Kopfteile (2) und (3) verbindet, wobei sich die Zwischen-Verstärkung (4) im Inneren des Spiralgehäuses (10) befindet;
die Zwischen-Lagerungen mittige Aufnahme-Lagerungen (9) umfassen, die mit der Zwischen-Verstärkung (4) verbunden sind.

2. Trocknungsvorrichtung für Fahrzeugwaschanlagen nach Anspruch 1, **dadurch gekennzeichnet, dass** das Einlassgitter (15) an einem Längsbereich des Spiralgehäuses (10) über seine gesamte Länge angeordnet ist.

3. Trocknungsvorrichtung für Fahrzeugwaschanlagen nach einem der vorangehenden Ansprüche, **dadurch gekennzeichnet, dass**:
im Inneren des vorderen Kopfteils (2) das Motor-Element (12) aufgenommen ist, das die Drehbewegung auf das Tangential-Gebläserad (7) überträgt;
das hintere Kopfteil (3) in seinem Innenraum einen Getriebemotor (13) aufnimmt, der mit dem Spiralgehäuse (10) verbunden ist, um die Auslassluft über seine tangentiale Verengung (14) zu leiten, wobei der Getriebemotor (13) eine Drehbewegung koaxial auf das Spiralgehäuse (10) überträgt.

4. Trocknungsvorrichtung für Fahrzeugwaschanlagen nach einem der vorangehenden Ansprüche, **dadurch gekennzeichnet, dass** sie radiale Ansätze (16) umfasst, die von den äußeren vorderen Flächen der Kopfteile (2-3) ausgehen, wobei diese radialen Ansätze (16) mit beweglichen Wagen verbunden sind, die die gesamte Trocknungsvorrichtung ziehen.

5. Trocknungsvorrichtung für Fahrzeugwaschanlagen nach einem der vorangehenden Ansprüche, **dadurch gekennzeichnet, dass** die Flügel der Tangential-Gebläseräder (7) eine plane Oberfläche haben.

6. Trocknungsvorrichtung für Fahrzeugwaschanlagen nach einem der Ansprüche 1 bis 4, **dadurch gekennzeichnet, dass** die Flügel der Tangential-Gebläseräder (7) eine Spiralform haben.

## Revendications

1. Dispositif de séchage pour machines de lavage de véhicule, comprenant :
une grille d'entrée d'air et un orifice de sortie étroit pour l'air qui est projeté sur un véhicule pour le sécher ;
au moins un impulseur tournant utilisant un élément de moteur, dont les pales aspirent l'air depuis l'extérieur et le soufflent vers l'orifice de sortie étroit quand l'impulseur tourne ;
un carter en volute qui a un mouvement de rotation indépendant ;
dans lequel le carter en volute inclut un orifice de sortie à étranglement tangentiel tout le long du carter en volute ;
**caractérisé en ce qu'**il comprend :
au moins deux impulseurs tangentiels (7) alignés, situés à l'intérieur du carter en volute (10) ; dans lequel lesdits impulseurs tangentiels (7) incluent des arbres transversaux (8) agencés dans la même direction qui sont couplés par leurs parties d'extrémité dans des supports sélectionnés parmi des premiers supports fixes de têtes d'extrémité : antérieure (2) et postérieure (3) ; et un certain nombre de seconds supports intermédiaires où des parties d'extrémité adjacentes des arbres transversaux (8) se rencontrent ;
un rail transversal en porte-à-faux (5) qui relie les deux têtes d'extrémité : antérieure (2) et postérieure (3) ;
un renforcement intermédiaire (4) qui relie les deux têtes d'extrémité (2) et (3), le renforcement intermédiaire (4) étant situé à l'intérieur du carter en volute (10) ;
où les supports intermédiaires comprennent des supports d'assise centraux (9) reliés au renforcement intermédiaire (4).

2. Dispositif de séchage pour machines de lavage de véhicule, selon la revendication 1, **caractérisé en ce que** la grille d'entrée (15) est agencée sur une zone longitudinale du carter en volute (10), sur toute sa longueur.

3. Dispositif de séchage pour machines de lavage de véhicule, selon l'une quelconque des revendications précédentes, **caractérisé en ce que** :
logé à l'intérieur de la tête d'extrémité antérieure (2) est l'élément de moteur (12) qui transmet le mouvement de rotation à l'impulseur tangentiel (7) ;
la tête d'extrémité postérieure (3) loge dans son intérieur un moteur à engrenages (13) associé au carter en volute (10) pour diriger l'air de sortie à travers son étranglement tangentiel (14), dans lequel le moteur à engrenages (13) transmet de façon coaxiale un mouvement de rotation au carter en volute (10).

4. Dispositif de séchage pour machines de lavage de véhicule, selon l'une quelconque des revendications précédentes, **caractérisé en ce qu'**il comprend des extensions radiales (16) qui commencent depuis des faces avant externes des têtes d'extrémité (2-3), ces extensions radiales (16) étant connectées à des chariots mobiles qui tirent tout le dispositif de séchage.

5. Dispositif de séchage pour machines de lavage de véhicule, selon l'une quelconque des revendications précédentes, **caractérisé en ce que** les pales des impulseurs tangentiels (7) ont une surface plate.

6. Dispositif de séchage pour machines de lavage de véhicule, selon l'une quelconque des revendications 1 à 4, **caractérisé en ce que** les pales des impulseurs tangentiels (7) ont une course hélicoïdale.
